(19) Europäisches Patentamt
European Patent Office
Office européen des brevets

(11) **EP 2 957 874 B1**

(12) **EUROPÄISCHE PATENTSCHRIFT**

(45) Veröffentlichungstag und Bekanntmachung des Hinweises auf die Patenterteilung:
**20.11.2019   Patentblatt 2019/47**

(51) Int Cl.:
***G01G 19/00*** *(2006.01)*

(21) Anmeldenummer: **15001769.7**

(22) Anmeldetag: **16.06.2015**

(54) **DYNAMISCHE WAAGE MIT MEHREREN WÄGESCHALEN**

IMPROVEMENTS TO A DYNAMIC BALANCE WITH A PLURALITY OF WEIGHING PANS

AMELIORATIONS D'UNE BALANCE DYNAMIQUE AYANT PLUSIEURS COUPELLES DE PESEE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.06.2014   DE 202014004821 U**
                **30.03.2015   DE 202015002361 U**

(43) Veröffentlichungstag der Anmeldung:
**23.12.2015   Patentblatt 2015/52**

(73) Patentinhaber: **Francotyp-Postalia GmbH**
**13089 Berlin (DE)**

(72) Erfinder:
• **Geserich, Frank**
  **16515 Friedrichsthal (DE)**
• **Beckmann, Stefan**
  **14612 Falkensee (DE)**
• **Blume, Andreas**
  **16515 Oranienburg (DE)**
• **van der Waydbrink, Karsten**
  **14482 Potsdam (DE)**

(74) Vertreter: **Seuss, Thomas et al**
**Jungblut & Seuss**
**Patentanwälte**
**Max-Dohrn-Strasse 10**
**10589 Berlin (DE)**

(56) Entgegenhaltungen:
**EP-A1- 2 065 687      EP-A1- 2 520 911**
**DE-A1- 2 703 899      DE-C1- 19 605 015**
**US-B1- 6 265 675**

**Beschreibung**

Dynamische Waagen, insbesondere zur automatischen Verarbeitung von Poststücken, wie z.B. Briefen, sind aus dem Stand der Technik bekannt (siehe z.B. EP 974819 B1 und EP 2520911 A1).

Beim praktischen Betrieb einer dynamischen Waage gemäß EP974819 zeigt sich, dass der Durchsatz von Poststücken, insbesondere Mischpost der Größen DIN C6 bis DIN B4 begrenzt ist. Im Dauerbetrieb wird für Mischpost ein durchschnittlicher Durchsatz von 50 Poststücken pro Minute erreicht. Dieser Durchsatz kann nicht weiter erhöht werden, ohne dass größere Fehler auftreten. Eine zentrale Ursache für die Begrenzung des Durchsatzes in der dynamischen Waage gemäß EP 974819 sind die großen Brieflücken: da sich während des Wägens immer nur ein Poststück auf der Waage befinden darf, ergeben sich große Mindestbrieflücken, die den Gesamtdurchsatz begrenzen. Es besteht daher die Aufgabe, den Durchsatz von Poststücken bei einer dynamischen Waage gemäß EP 974819 erheblich zu verbessern, ohne dass die Fehlerquote erhöht wird. Es wurde gefunden, dass durch die nachfolgend geschilderten erfinderischen Maßnahmen der Postdurchsatz bis zu 90 Poststücken pro Minute bei Poststücken der Größe DIN C6 lang bzw. bis zu 110 Poststücken pro Minute bei Poststücken der Größe DIN C6 erhöht werden kann, ohne dass zusätzliche Fehler bei der Wägung auftreten.

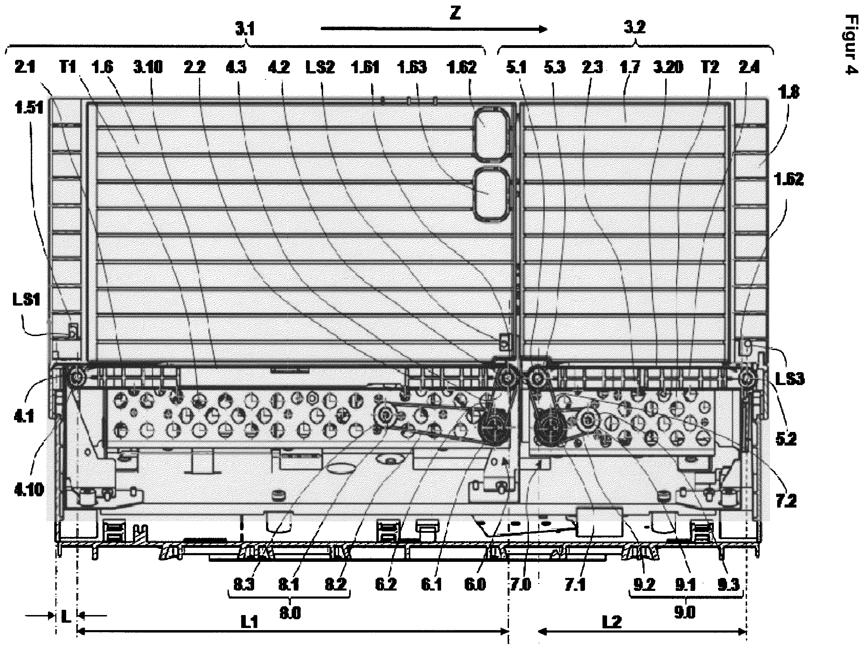

Die EP 2520911 A1 beschreibt eine dynamische Waage mit einer Mehrzahl, insbesondere zwei, Wägeeinheiten mit jeweils einer Wägezelle und mit einer Wägeschale. Figur 4 der genannten Schrift zeigt beispielhaft eine derartige Anordnung, bei der die zwei Wägeschalen durch zwei Transportbänder ausgebildet sind, die horizontal in gleicher Höhe verlaufen. Dabei erkennt man ein erstes Gestell für den ersten Wägeteller und ein zweites Gestell für den zweiten Wägeteller sowie jeweils ein Adapter zur Lasteinleitung in die jeweils zugeordneten Wiegezellen. Das zu wiegende Poststück wird gemäß dieser Abbildung von links nach rechts über die beiden Transportbänder und die dazugehörigen Wägeschalen transportiert. Der Transport des Postgutes erfolgt dabei nahezu senkrecht (Winkel zur Bodenplatte ca. 110°) auf der Längskante stehend. Poststromaufwärts von der Waage, das heißt in der Darstellung links, befindet sich eine entsprechende Zuführeinrichtung. Typischerweise wird in dieser Zuführvorrichtung eine Vereinzelung des Postgutes vorgenommen und der Waage zugeführt. Poststromabwärts, das heißt in der Abbildung rechts, findet dann beispielsweise die eigentliche Frankierung des Postgutes durch einen entsprechenden Aufdruck statt, wobei das durch die Waage ermittelte Gewicht des Postgutes zusammen mit den Außenmaßen zur jeweiligen nötigen Frankierung führt. Die beiden zu den beiden Wägeschalen dazugehörigen Messzellen, bestehend jeweils aus einem Wägebalken mit je einem aufgebrachten Dehnungsstreifen, sind vertikal kaskadiert angeordnet, so dass das Gewicht des Postgutes und das Gesamtgewicht der ersten Wägeeinheit und das Gewicht der zweiten Wägeschale auf der Wägezelle der zweiten Wägeeinheit als Vorlast lastet. Die Vorteile dieser Anordnung sind explizit im genannten Dokument beschrieben, so dass insoweit auf den früheren Stand der Technik verwiesen werden kann. Gleichfalls ist ausgeführt, dass dieses Prinzip auch für mehr als zwei Wägeeinheiten ausgeweitet werden kann.

Eine weitere dynamische Waage ist aus der EP2017589 A2 bekannt. Bei der dort beschriebenen Ausführungsform sind die Wiegeeinrichtungen allerdings nicht funktionell kaskadiert angeordnet.

Bei der dynamischen Waage gemäß EP 2017589 A2 ist ebenfalls die zweite Wägeschale der ersten Wägeschale poststomabwärts nachgeordnet. Die dynamische Waage gemäß EP 2017589 A2 hat gegenüber der dynamischen Waage gemäß EP 2520911 A1 den Nachteil, dass die zweite Wägezelle noch nicht belastet wird, wenn ein Wägegut auf die erste Wägeschale auffährt. Dadurch kann die zweite Wägezelle erst später auf den Gewichtswert des Wägeguts einschwingen nämlich dann, wenn das Wägegut auf die zweite Wägeschale auffährt.

Die maximale Baulänge der Module des aus dem Stand der Technik bekannten Frankiersystems Centormail® beträgt 550 mm. Die Baulänge des erfindungsgemäßen Moduls "dynamische Waage" sollte unverändert beibehalten werden, trotzdem sollte der Durchsatz von Wägegut erhöht werden.

Die vorliegende Erfindung betrifft daher eine dynamische Waage mit zwei Wägeeinheiten, wobei jede Wägeeinheit mindestens mit einer auf einem Gestell montierten Wägeschale und mit einer Wägezelle (W1, W2) ausgestattet ist, die auf einem Wiegebalken (Wb1, Wb2) angeordnet ist, wobei jeweils die Wägeschale in einer oberen Ebene liegt und die Wägezelle zwischen der oberen Ebene und einer in Schwerkraftrichtung von der oberen Ebene entfernten unteren Ebene angeordnet ist,

wobei die Wägezelle (W2) einer zweiten Wägeeinheit in Schwerkraftrichtung zu der Wägezelle (W1) einer ersten Wägeeinheit funktional kaskadiert angeordnet, die zweite Wägeeinheit mit ihrer unteren Ebene auf einer in einer x/z Bezugsebene eines Koordinatensystems liegenden Bodenplatte (B) der dynamischen Waage (1) befestigt ist, wobei je eine elektronische Messwertverarbeitungseinheit (EV1, EV2) den Wägezellen (W1, W2) zugeordnet ist,

mit mindestens einem Sensor (LS1, LS2, LS3) und mit einer Transportvorrichtung für einen Transport eines auf der Kante stehenden Wägeguts in eine Transportrichtung z während des Wägens in jeder Wägeeinheit, wobei jede Transportvorrichtung einen Transportriemen, einen Motor (M1, M2) zum Antrieb der vorgenannten Transportvorrichtung und einen Encoder (E1, E2) aufweist, mit einer Übertragung der Ansteuerungssignale von einer gemeinsamen Steuereinheit (GST) zu den Motoren (M1, M2) und mit einer Übertragung der Ausgangssignale der elektronischen Messwertverarbeitungseinheiten (EV1, EV2) der ersten Wägezellen (W1, W2) zu den Eingängen der gemeinsamen Steuereinheit (GST),

**dadurch gekennzeichnet,** dass

ein Federblech (F) auf einer ersten Welle oder einer feststehenden Achse einer Umlenkrolle (4.1) des in Transportrichtung z des Wägegutes laufenden ersten Transportriemens (3.11) montiert ist, welches um eine Länge (L) entgegen der Transportrichtung des Transportriemens (3.11) über die erste Welle oder die feststehende Achse hinausragt, wobei das Federblech auf der Länge (L) als Gleitblech (3.12) ausgebildet und posteingangsseitig mit einem Teil (Fa) in Schwerkraftrichtung abgewinkelt ist

und die Übertragung der Ansteuerungssignale zu dem ersten Motor (M1) über ein erstes und zweites Flachbandkabel (K1, K2) erfolgt, welche eine Dicke und eine Breite aufweisen, wobei die Breite größer als die Dicke ist, wobei die Oberflächen auf der breiten Seite der Flachbandkabel parallel zu den mit jeweils einer Wägezelle versehenen Oberflächen der Wiegebalken angeordnet sind, und wobei sowohl die Übertragung der ausgangsseitigen Ansteuerungssignale der gemeinsamen Steuereinheit (GST) zu dem zweiten Motor (M2) als auch die Übertragung der Ausgangssignale der elektronischen Messwertverarbeitungseinheit (EV1) der ersten Wägezelle (W1) zu den Eingängen der gemeinsamen Steuereinheit (GST) über das erste Flachbandkabel (K1) erfolgt, und

a) die beiden für den Vortrieb der Transportriemen vorgesehenen Motoren (M1, M2) gleich aufgebaut sind und jeweils eine Motorwelle (8.1, 9.1) aufweisen, die zur Bodenplatte (B) hin in x-Richtung geneigt ist, wobei der geringste Abstand der Motorwellen (8.1, 9.1) von der Bodenplatte (B) kleiner oder gleich ist, als der größte Außendurchmesser der Motoren (M1, M2) ist,

b) die poststromaufwärts angeordnete erste Wägeschale auf einem ersten Gestell (T1) und eine in Transportrichtung z angeordnete zweite Wägeschale auf einem zweiten Gestell (T2) montiert ist und auf der Rückseite jedes Gestells (T1, T2) jeweils ein Adapter (Ad1, Ad2) vorgesehen ist, der an dem zugehörigen Gestell (T1, T2) montiert ist, wobei der zweite Motor (M2) mit einer Toleranz von kleiner gleich +/- 10mm lotrecht unter dem zweiten Adapter (Ad2) an dem zweiten Gestell (T2) angeordnet ist, wobei das zweite Gestell (T2) an dem einem Ende eines Trägers (Tr2) aufliegt, wobei das andere Ende des Trägers (Tr2) an einem Lasteinleitungspunkt (La2) des Wiegebalkens (Wb2) montiert ist,

c) die Motoren (M1, M2) mit einer Toleranz von kleiner gleich +/- 10mm symmetrisch zum Lasteinleitungspunkt (La2) des Wiegebalkens (Wb2) angeordnet sind

und

d) ein an dem Gestell (T1, T2) montiertes Getriebe (6.0, 7.0, 8.0, 9.0) Zahnriemenräder (4.3, 5.3, 6.0, 7.0, 8.3, 9.3) aufweist, dass die Zahnriemenräder durch eine Getriebeumsetzung gleichsinnig wie die Motoren (M1, M2) laufen und die Motordrehzahl so gewählt wird, dass sich die Störschwingungen unterhalb einer maximalen Transportgeschwindigkeit Vmax nur in einem Toleranzbereich von +- 0,6 g auf einen aus den Signalen der Wägezellen ermittelten Messwert auswirken.

Vorteilhafte Ausgestaltungen der Erfindung sind Gegenstand der Unteransprüche.

Eine Wägeschale im Sinne dieser Schrift besteht aus einer Transportvorrichtung und einer Führungswand zur Führung von auf der Kante stehenden Poststücke, die durch einen Transportriemen der Transportvorrichtung in Transportrichtung z transportiert werden.

Die erfinderischen Maßnahmen werden nachfolgend im Einzelnen erläutert:

1. Montage eines Federbleches auf der in Laufrichtung des Postgutes ersten Welle des in Laufrichtung des Postgutes ersten Transportbandes, welches entgegen der Laufrichtung des Transportbandes über dieses hinausragt. Das erfindungsgemäß angebrachte Federblech verlängert das Transportband und somit den ersten Wägeteller mechanisch und ermöglicht somit die frühere Wägung längerer Poststücke. Darüber hinaus ist das Federblech posteingangsseitig nach unten gebogen. Dies kann in einfacher Weise durch eine Abwinkelung des Bleches an der Posteingangsseite erfolgen, z.B. im Winkel von 40° nach unten, alternativ kann auch eine Abrundung dieses Bereiches vorliegen. Die Montage des erfindungsgemäßen Federbleches verlängert nicht nur die Waagschale, sondern sorgt durch die Abwinkelung bzw. Abrundung der Posteingangsseite auch zu einer Verminderung von Stößen, die durch den Vortrieb des Poststückes entstehen. Auf diese Weise werden Schwingungen der ersten Wägeschale deutlich verringert, mit dem Resultat einer erhöhten Wägegenauigkeit und erhöhten Briefdurchsatzes, da die Einschwingzeit verkürzt ist. Die Abwinkelung des erfindungsgemäßen Federbleches sollte dabei im Bereich von 30 - 50 Grad, vorzugsweise 40 Grad liegen. Bei einer Waage, die für normales (Misch-)-Postgut von DIN C6 - DIN B4 ausgelegt ist sollte das posteingangsseitige Ende des Federbleches 3 - 5, vorzugsweise 4 cm unterhalb der Ebene des Transportbandes liegen. Bevorzugt wird das Federblech an der in Postlaufrichtung ersten Welle des Transportbandes montiert. Alternativ kann das Federblech auch an einer in Postlaufrichtung ersten Achse des Transportbandes montiert sein. (Figur 4)

2. Die Steuerung der Motoren sowie die Übertragung der Wägesignale aus den Sensoren erfolgt über ein Flachbandkabel, welches parallel zu den Wägebalken angeordnet ist. Der Wägebalken und die damit erfolgende Gewichtsmessung über Dehnungsmessstreifen sind bereits im Stand der Technik dargestellt (s. EP2520911A1, Absätze 30 - 35). Zur Übertragung der Sensordaten sowie der Motorsteuerung (Antrieb und Messung der Rotationsgeschwindigkeit) wird im Stand der Technik eine drahtlose Übertragung vorgeschlagen, w. z. B. durch Infrarotsignale, durch Funk oder induktive Übertragung (s. EP 2520911A1, Absätze 72 - 75). Es bestand daher offenbar das Vorurteil in der Fachwelt, dass eine derartige Übertragung zu Messstörungen führt, z. B. zur Einkopplung von Störbiegekräften, falls hierzu Kabel verwendet werden. Die erfindungsgemäße Verwendung von Flachbandkabel überwindet dieses Vorurteil: Es kann gezeigt werden, dass keinerlei Einkopplung von fehlererhöhenden Störbiegekräften oder Schwingungen erfolgt, sofern das Bandkabel einen kleineren Durchmesser als 0,3 mm aufweist sowie parallel zum Biegebalken angeordnet ist. Die Fläche des Flachbandkabels läuft dabei parallel zurmit dem Dehnungsstreifen versehenen Oberfläche des Wiegebalkens, welche wiederum parallel zur Bodenplatte verläuft.

3. Darüber hinaus hat sich gezeigt, dass eine elektronische Ausfilterung von Störschwingungen vorteilhaft beim Betrieb einer dynamischen Waage gemäß EP2520911 ist. Eine Analyse der beim Betrieb der Waage auftretenden Schwingungen zeigt, dass es eine Vielzahl von Störungen, insbesondere Störschwingungen beim Betrieb der dynamischen Waage gibt. Hierzu tragen unter anderem die Antriebsmotoren der Transportbänder bei. Weitere Störquellen sind die an die Waage angrenzenden Vorrichtungen zur Vereinzelung und zum Vortrieb der Poststücke poststromaufwärts, sowie der Frankierung poststromabwärts. Darüber hinaus weist jede Anordnung eine gewisse Eigenfrequenz auf, wobei es zu Resonanzen mit den oben genannten anderen Schwingungsquellen kommt. Zur Überwindung dieses Problems wird erfindungsgemäß vorgeschlagen die Eigenfrequenz der Vorrichtung zu erhöhen, indem die Anordnung einer ersten und zweiten Wägeeinheit möglichst geringe Masse bei gleichzeitig hoher Steifigkeit aufweist.

Durch den bekannten Zusammenhang

$$\omega_0 = \sqrt{\frac{c}{m}}$$

wird durch Verringerung der Masse bzw. Erhörung der Steifigkeit die Eigenfrequenz zu höheren Werten verschoben.

Erfindungsgemäß wird dies insbesondere durch eine Gestaltung des Gestells und des Trägers erreicht, die jeweils eine Vielzahl von Ausnehmungen aufweisen, um die Masse zu reduzieren. Gleichzeitig wird Aluminium oder eine Aluminiumlegierung mit definierter Festigkeit (beispielsweise AlMg3 F28 mit besonders geeigneter Kaltumformbarkeit und hoher Zugfestigkeit ($Rmca$ 280N/mm$^2$)) als überwiegendes Baumaterial herangezogen, um die Steifigkeit zu erhöhen. Darüber hinaus werden Rippen vorgesehen, um Schwingungen zu dämpfen. Die gesamte Konstruktion (inklusive der Versteifungsrippen) wird bevorzugt genietet, da dies nicht nur eine kostengünstigen Herstellung erlaubt, sondern auch zur Schwingungsdämpfung durch Mikroreibung in den Nietverbindungen beiträgt.

Darüber hinaus werden die Motoren so nah wie möglich an die Schwerpunkte der jeweiligen Wägeschalen angeordnet, um die Störungen so gering wie möglich zu halten. Dazu werden insbesondere die beiden für den Vortrieb der Transportbänder vorgesehenen Motoren

    a) möglichst nah am Bodenblech angeordnet,
    b) möglichst lotrecht unter den Adaptern der jeweils zugeordneten Wiegezellen angeordnet,
    c) möglichst symmetrisch zum Punkt der Lasteinleitung in die Wiegezelle 2 angeordnet
    und
    d) durch Getriebeumsetzung die Motoren gleichsinnig laufen und die Motordrehzahl möglichst hoch liegt.

Insgesamt ergibt sich durch die beschriebenen Maßnahmen eine Verschiebung der Eigenfrequenz in einen Bereich, der ohne weiteres durch einen Tiefpassfilter ausgefiltert werden kann und somit die Messung nicht mehr stört. Beispielsweise wird ein Tiefpassfilter verwendet, der oberhalb von ca. 20 Hz, bevorzugt bereits oberhalb von ca. 15 Hz um mindestens 20 dB, bevorzugt mindestens 30 dB dämpft. Die Eigenfrequenz der dynamischen Waage liegt erfindungsgemäß oberhalb von 25 Hz (z. B. zwischen 30 und 50 Hz).

Die oben genannten, intern erzeugten Störfrequenzen durch die Antriebe werden insbesondere durch Anpassung der beiden Motoren und deren Getriebe und die Übersetzung auf den Transportriemen minimiert. Die durch ein Getriebe jeweils untersetzte Antriebskraft wird durch diejenige der beiden Umlenkrollen des Transportriemens eingekoppelt, welche der Geräte-Mitte der dynamischen Waage näher liegt. Jedes Getriebe enthält ein getriebeeingangsseitiges Zahnriemenrad mit Zahnriemen, ein Doppelzahnriemenrad, welches das Drehmoment erhöht bei einem nur sehr geringen Lagerreibungsverlust, sowie ein getriebeausgangsseitiges Zahnriemenrad mit Zahnriemen. Vorteilhaft ist ebenso, dass alle Zahnriemenräder gleichsinnig drehen.

Beispielsweise wird das vom Motor abgegebene Drehmoment $M_{An}$ um den Faktor 1,6 erhöht, d.h. $M_{Ab}$ = $M_{An}$ • 1,6 und die Motordrehzahl $n_{An}$ um den Faktor 1/1,6 = 0,6237 verringert, d.h. $n_{Ab}$ = 0,6237 • $n_{An}$. Insgesamt wird das Getriebeübersetzungsverhältnis $i_G$ = $i_{8-6}$ / $i_{6-4}$ = (37 • 26)/(25 • 24) = 1,6033 so gewählt, dass Störschwingungen erst ab höheren Transportgeschwindigkeiten, als bei der gewählten Soll-Transportgeschwindigkeit für zu transportierende Poststücke auftreten. Die übrigen Störschwingungen werden elektronisch aus dem Wiegemesssignal ausgefiltert.

Die Getriebeübersetzung wurde ist so ausgewählt, dass die Motordrehzahl bei der vorgegebenen Systemgeschwindigkeit möglichst hoch, aber noch deutlich unterhalb der Systemeigenfrequenz liegt. Dadurch wird einerseits erreicht, dass die vom Motor durch rotierende Massen eingeprägten Störkräfte und Schwingungen vom elektronischen Filtersystem (Tiefpassfilter, erst oberhalb einer bestimmten Frequenz wirksam) deutlich gedämpft werden und somit nur zu rel. kleinen, zu vernachlässigenden Messfehlern führen. Andererseits liegen die intern erzeugten Störfrequenzen bei den gewählten Motordrehzahlen deutlich unterhalb der Systemeigenfrequenz, so dass es keine Resonanzeffekte gibt und somit keine undefinierten Störkräfte und Schwingungen in die Waage eingeprägt werden. Außerdem wird durch den Betrieb unterhalb der Resonanzfrequenz die Geräuschentwicklung stark reduziert. Damit werden nicht nur die durch die Motoren eingeprägten Störkräfte deutlich verringert, sondern auch die Möglichkeit geschaffen, die störenden extern eingekoppelten Schwingungen durch angepasste Kerbfilter, insbesondere digitale Kerbfilter auszublenden. Derartige digitale Kerbfilter sind bereits im Stand der Technik erwähnt und bedürfen an dieser Stelle keiner weiteren Erläuterung. Für den erfindungsgemäßen Zweck können beispielsweise Kerbfilter verwendet werden, die die externen Störschwingungen (z.B. 9 Hz) und die dazugehörige erste harmonische Schwingung (hier entsprechend 18 Hz) um mindestens 60 dB, bevorzugt mindestens 70 dB dämpfen.

Insgesamt wird durch diese Anordnung eine Minimierung der Störungen erreicht, so dass eine maximale Transportgeschwindigkeit von 700 mm/s erreicht werden kann, ohne dass nennenswerte Störungen, insbesondere Resonanzen auftreten (s. Figur 3), während in der Vorrichtung gemäß EP 2520911A1 lediglich eine Transportgeschwindigkeit von 400 mm/s erreicht werden konnten, da bei Überschreitung dieser Geschwindigkeit, die Störungen zu groß wurden.

Die zur Ausführung dieser Erfindung nötigen Wägeeinheiten, mit je einer Wägezelle und mit einer Wägeschale, Sensoren, Transportvorrichtung, Motoren, Encoder, Steuereinheiten und deren Ausgängen und elektrischen Verbindungen, sind bereits im Dokument EP 2520911 A1 ausführlich beschrieben und benötigen an dieser Stelle daher keine weitere Erläuterung. Gleiches gilt für die funktional kaskadierte Anordnung der Wägeeinheiten.

Erfindungsgemäß werden die oben genannten Maßnahmen 1 - 3 in einem Gerät vorgenommen.

Eine besonders bevorzugte Ausführungsform der Erfindung besteht darin, dass kürzeres Wägegut (Poststücke bis zur Größe DIN C6 lang) in der ersten Wägeeinheit gewogen werden, während längere Poststücke (länger als Größe DIN C6 lang) von der zweiten Wägeeinheit gewogen werden. In dieser Ausführungsform kann ein besonders kurzer Durchlauf und damit ein besonders hoher Brieftransport realisiert werden. Es wurde gefunden, dass durch die erfindungsgemäßen Maßnahmen der Postdurchsatz auf bis zu 90 Poststücken pro Minute bei Poststücken der Größe DIN C6 lang bzw. bis zu 110 Poststücken pro Minute bei Poststücken der Größe DIN C6 erhöht werden kann, ohne dass zusätzliche Fehler bei der Wägung auftreten.

Die weiteren Vorteile der Erfindung ergeben sich aus den Figuren, die jedoch nur beispielhaft zu verstehen sind und keine Einschränkung beinhalten sollen. Zum weiteren Verständnis der Erfindung wird hiermit ergänzend auf das Dokument EP 2520911 A1 und dessen Figuren verwiesen.

**Erläuterung der Figuren:**

**Figur 1** zeigt den grundsätzlichen Aufbau der erfindungsgemäßen Waage in Frontansicht. Dabei wird der erfindungsgemäße Transportriemen durch die Plexiglasscheibe (1.4) verdeckt.

**Die Figuren 2 und 3** zeigen die Seitenansicht. Deutlich zu sehen ist die Neigung der Wägeschalen.

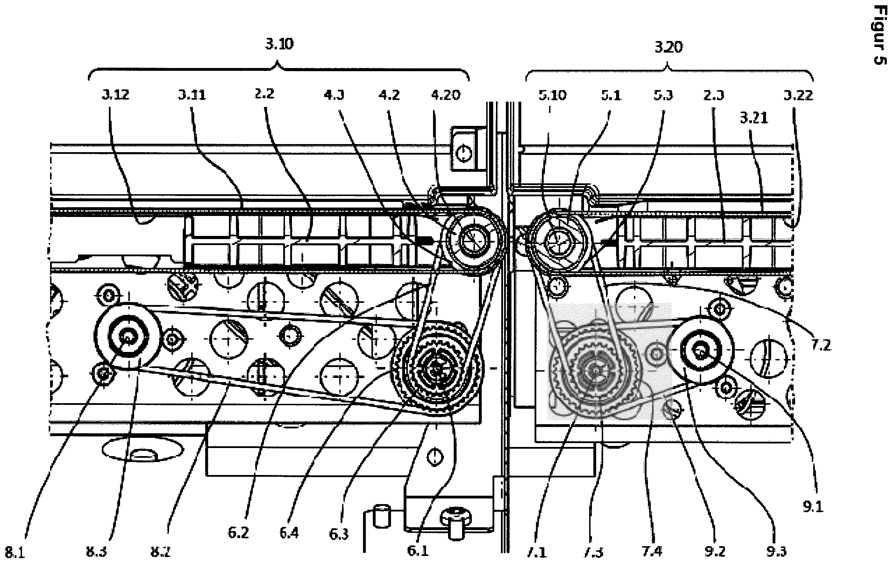

**Figur 4** zeigt eine offene Darstellung der erfindungsgemäßen Waage. Deutlich zu erkennen sind die Antriebsvorrichtungen der Transportriemen. Diese werden in der folgenden **Figur 5** nochmals im Detail dargestellt. Deutlich zu erkennen sind die Motorwellen der Motoren M1 und M2 und die dazugehörigen Zahnriemen, die über ein Getriebe den Vortrieb der Transportrahmen bewerkstelligen. Zu erkennen ist die Wiegeschale 1 mit einer Länge L1, die Wiegeschale 2 mit einer Länge L2 und das Federblech F mit einer Länge L. Die Länge L1 des Wiegetellers 1 kann dabei 240-340 mm, vorzugsweise ca. 331 mm betragen. Die Länge L2 des Wiegetellers 2 kann dabei 150-180 mm, vorzugsweise ca. 161 mm betragen. Die Länge L des Federblechs F kann dabei 14-21 mm, vorzugsweise ca. 18 mm betragen.

**Figur 6** zeigt diese Anordnung nochmals aus einer anderen Perspektive.

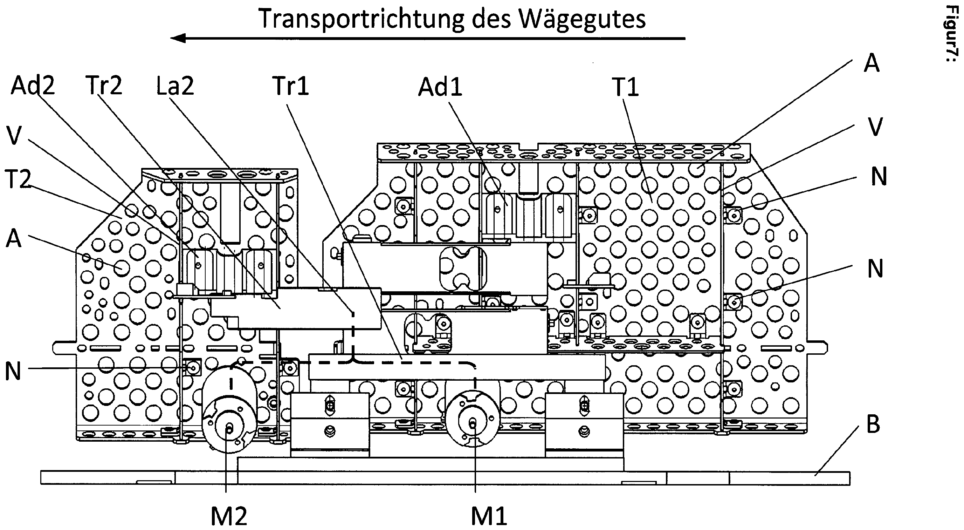

**Figur 7** zeigt den grundsätzlichen Aufbau der erfindungsgemäßen Waage. Zu sehen ist eine perspektivische Darstellung der Anordnung der elektrischen und mechanischen Baugruppen der dynamischen Waage von hinten. Das Wägegut läuft in dieser Darstellung von rechts nach links (in Richtung des Pfeils). Deutlich zu erkennen ist eine Vielzahl von Ausnehmungen (A, nur an wenigen Beispielen dargestellt), in der Grundkonstruktion bestehend aus Gestell und Träger, die erfindungsgemäß die Masse reduzieren. Die Ausnehmungen in den Trägern Tr1 und Tr2 sind vertikal angebracht, so dass sie aus der dargestellten Perspektive nicht zu erkennen sind.

Die beiden Antriebsmotoren M1 und M2 befinden sind nahe der Bodenplatte B. Deutlich zu erkennen ist die Positionierung des Motor 1 (M1), der sich fast lotrecht unter dem Adapter 1 Ad1 der Wiegezelle 1 befindet, während sich der Motor 2 (M2) fast lotrecht unter dem Adapter 2Ad2 der Wiegezelle 2 befindet. Beide Motoren sind symmetrisch in Bezug auf den Punkt der Lasteinleitung in der Wiegezelle 2 angeordnet (durch gestrichelte Linien angedeutet). Darüber hinaus sind verschiedene Versteifungselemente (V) zu erkennen, die wiederum mit Nieten (N) befestigt wurden, zur besseren Übersichtlichkeit nur teilweise mit Bezugszeichen gekennzeichnet.

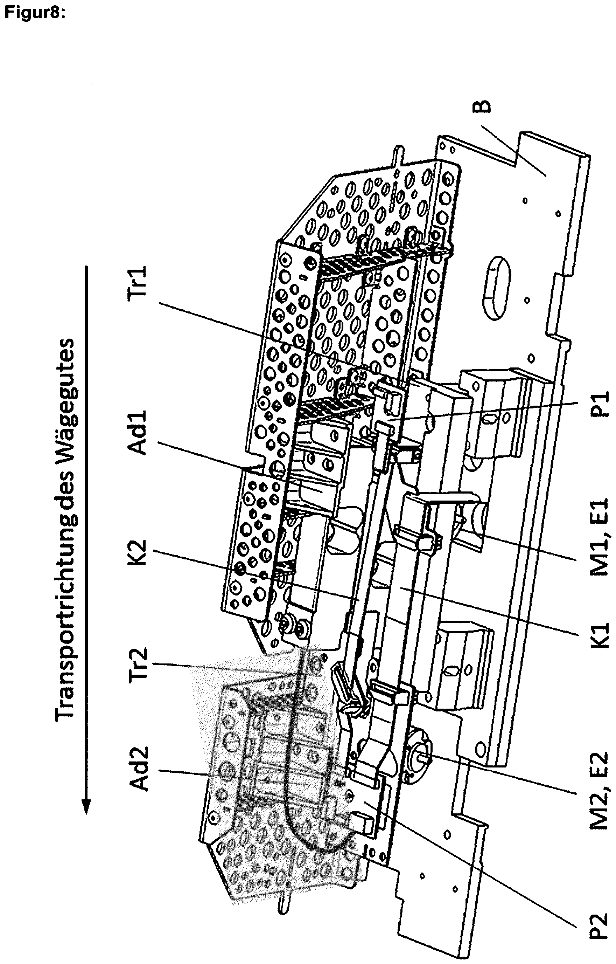

**Figur 8** zeigt weitere Details der erfindungsgemäßen Vorrichtung aus einer anderen Perspektive, mit besonderer Darstellung der elektrischen Baugruppen. Auch hier verläuft die Transportrichtung des Wegegutes von rechts nach links (Pfeil). Zu sehen sind hier insbesondere die beiden Flachbandkabel, die mit der flächigen Seite parallel zu den Wiegezellen bzw. der Bodenplatte angeordnet sind. Deutlich zu sehen ist die Leiterplatte der Wiegezelle 2, die den Übergang der elektrischen Signale in ein Rundkabel gewährleistet. Auch in dieser Perspektive sind die Nietverbindungen (N), Die Versteifungselemente (V) und die Ausnehmungen (A) gut zu erkennen.

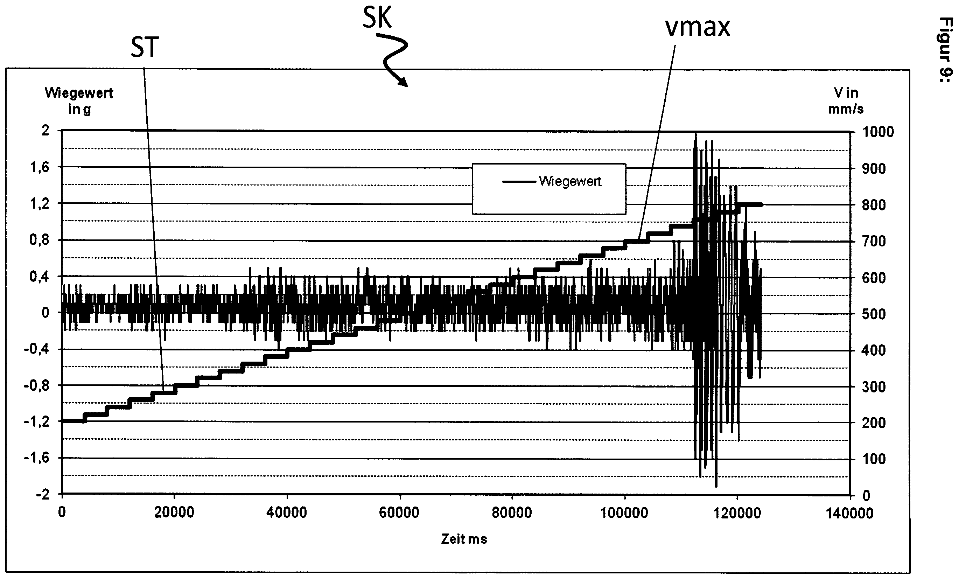

**Figur 9** zeigt das Messergebnis einer Messung von Störkräften in Abhängigkeit von der Transportgeschwindigkeit. Die Transportgeschwindigkeit wurde hierzu stufenweise von ca. 200 - ca. 800 mm/s erhöht. Es ist deutlich zu erkennen, dass der Messfehler bei einer Variation der Transportgeschwindigkeit von 200 - ca. 720 mm/s kaum variiert. Ab ca. 740 mm/s treten deutlich sichtbare Störungen auf, die das Ergebnis in einer Weise verfälschen, dass es für den erfindungsgemäßen Zweck nicht mehr akzeptabel ist. Bei einer Transportgeschwindigkeit von 700 mm/s kann jedoch die Wägung mit ausreichender Genauigkeit erfolgen.

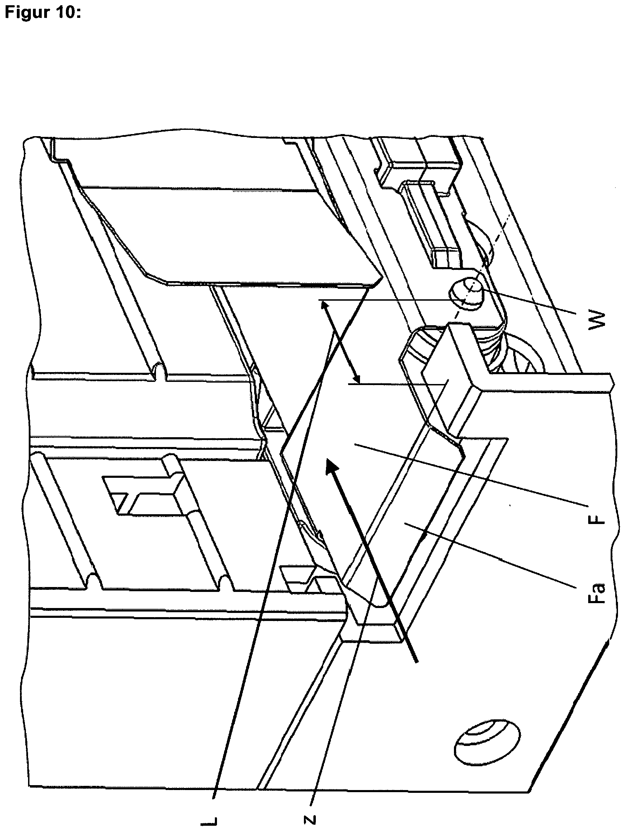

**Figur 10** zeigt das erfindungsgemäß befestigte Federblech. Die Laufrichtung des Wägegutes erfolgt dabei in Richtung des Pfeiles (hier von links nach rechts). Deutlich zu erkennen ist die Befestigung an der ersten Welle (W) des ersten Transportbandes. Zu sehen ist ebenfalls der abgewinkelte Teil des Federbleches $F_a$, welcher eine Abwinkelung von ca. 40° zeigt. Zu erkennen ist darüber hinaus, dass durch das erfindungsgemäße Federblech eine Verlängerung des Wägetellers um die Länge L erfolgt, welche an der Abwinkelungskante beginnt und mit der Welle endet.

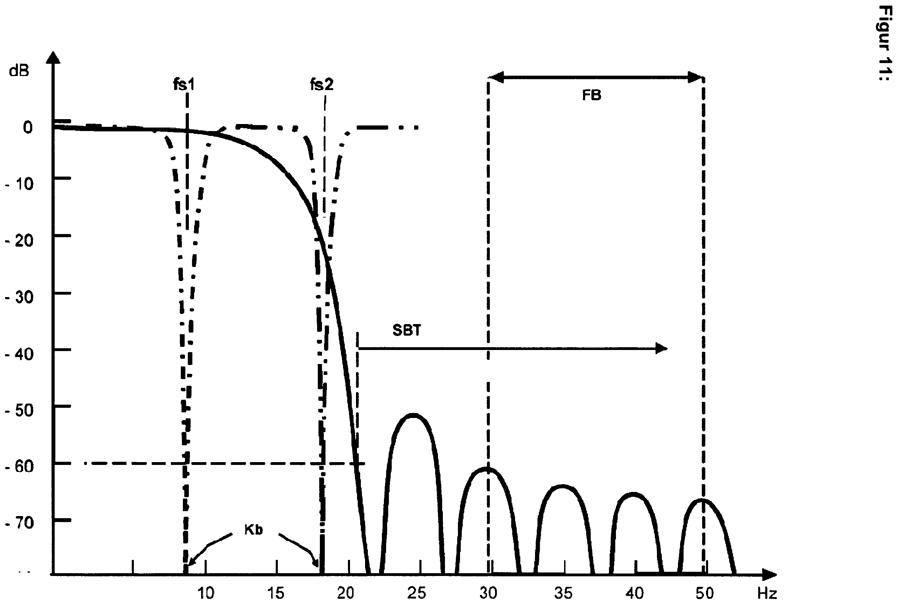

**Figur 11** zeigt die Anwendung der erfindungsgemäßen Filter. Deutlich zu erkennen ist in dieser Abbildung die Sperrbereiche der beiden Kerbfilter hier beispielhaft bei ca. 9 und bei ca. 18 Hz dargestellt. Darüber hinaus ist der Sperrbereich des Tiefpasses zu erkennen. Durch die erfindungsgemäßen Maßnahmen, welche in der vorstehenden Beschreibung erläutert wurden, wird die Eigenfrequenz der dynamischen Waage in den Sperrbereich des Tiefpassfilters verschoben, so dass die Störungen auf diese Weise minimiert werden. Die maximale Transportgeschwindigkeit Vmax = 700mm/s wurde empirisch ermittelt.

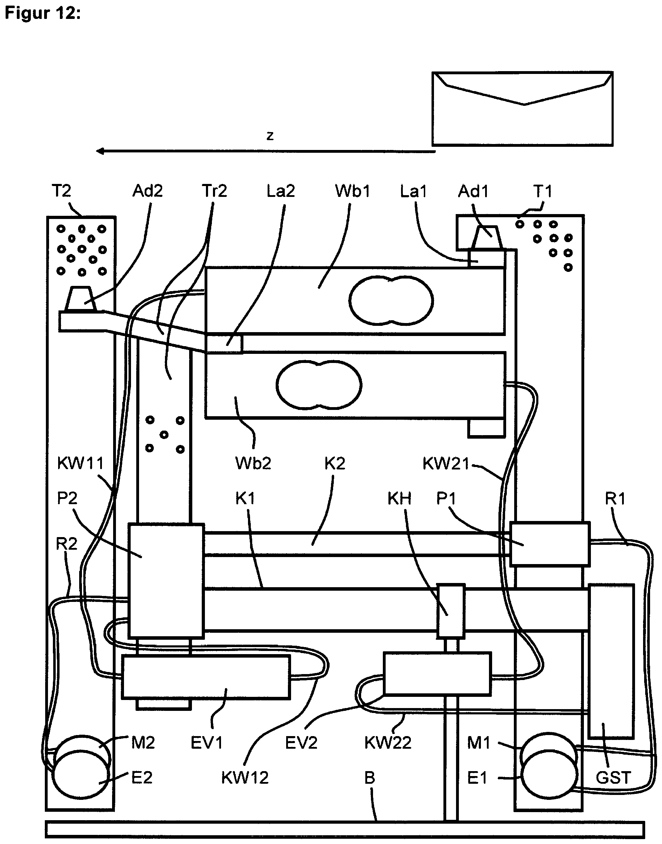

**Figur 12** zeigt eine schematische Darstellung der Kabelverläufe innerhalb der dynamischen Waage. Ein erstes Rundkabel R1 verbindet elektrisch die ersten Leiterplatte P1 mit dem ersten Motor M1 und dem ersten Encoder E1. Die ersten Leiterplatte P1 ist an dem ersten Gestell T1 montiert. Das von der ersten Leiterplatte P1 ausgehend erste Rundkabel R1 dient der Übertragung der Ansteuerungssignale zu dem ersten Motor M1 und einer Übertragung der Encodersignale von dem ersten Encoder E1 zur ersten Leiterplatte P1. Es ist vorgesehen, dass der Adapter Ad1 des ersten Gestells T1 auf dem Lasteinleitungspunkt La1 des ersten Wiegebalkens Wb1 aufliegt.

Ein zweites Rundkabel R2 verbindet elektrisch die zweite Leiterplatte P2 mit dem zweiten Motor M2 und dem zweiten Encoder E2. Die zweite Leiterplatte P2 ist an dem Träger Tr2 montiert. Das von der zweiten Leiterplatte P2 ausgehende zweite Rundkabel R2 dient der Übertragung der Ansteuerungssignale zu dem zweiten Motor M2 und einer Übertragung der Encodersignale von dem zweiten Encoder E2 zur zweiten Leiterplatte P2. Es ist vorgesehen, dass der Adapter Ad2 des zweiten Gestells T2 an dem einen Ende des Trägers Tr2 aufliegt, wobei das andere Ende des Trägers Tr2 an einem Lasteinleitungspunkt La2 des Wiegebalkens Wb2 montiert ist.

Vom ersten Wiegebalken Wb1 geht ein geschirmtes Rundkabel KW11 ab, welches mit dem Eingang der ersten elektronischen Messwertverarbeitungseinheit EV1 verbunden ist. Die erste elektronische Messwertverarbeitungseinheit EV1 und die zweite Leiterplatte P2 sind mechanisch mit dem Träger Tr2 verbunden. Vom Ausgang der ersten elektronischen Messwertverarbeitungseinheit EV1 geht ein geschirmtes Rundkabel KW12 ab, welches mit der zweiten Leiterplatte P2 elektrisch verbunden ist.

Vom zweiten Wiegebalken Wb2 geht ein geschirmtes Rundkabel KW21 ab, welches mit dem Eingang der zweiten elektronischen Messwertverarbeitungseinheit EV2 verbunden ist. Die zweite elektronische Messwertverarbeitungseinheit EV2 und ein Kabelhalter KH sind mechanisch mit der Bodenplatte B verbunden und im Bereich des Gestells T1, vorzugsweise nahe der Rückseite der dynamischen Waage und dabei dem Gestell T1 gegenüber angeordnet. Vom Ausgang der zweiten elektronischen Messwertverarbeitungseinheit EV2 geht ein geschirmtes Rundkabel KW22 ab, welches mit einem Eingang der gemeinsamen Steuereinheit GST verbunden ist.

Zwischen der zweiten Leiterplatte P2 und dem Kabelhalter KH ist ein erstes Flachbandkabel K1 mit der flachen Seite parallel zur Bodenplatte B angeordnet, wobei über das erste Flachbandkabel K1 sowohl die Übertragung der ausgangsseitigen Ansteuerungssignale der gemeinsamen Steuereinheit GST zu dem zweiten Motor M2, als auch die Übertragung der Encodersignale von dem zweiten Encoder E2 und die Übertragung der Ausgangssignale der elektronischen Messwertverarbeitungseinheit EV1 zu den Eingängen der gemeinsamen Steuereinheit GST erfolgt.

Zwischen der ersten Leiterplatte P1 und der zweiten Leiterplatte P2 ist ein zweites Flachbandkabel K2 mit der flachen Seite parallel zur Bodenplatte B angeordnet. Die ersten Leiterplatte P1 ist mechanisch mit dem ersten Gestell T1 verbunden. Über das zweite Flachbandkabel K2 erfolgt die Übertragung der Ansteuerungssignale zu dem ersten Motor M1 und einer Übertragung der Encodersignale von dem ersten Encoder E1. Die ersten Leiterplatte P1 dient dabei der Adaption des ersten Rundkabels R1 an das zweite Flachbandkabel K2.

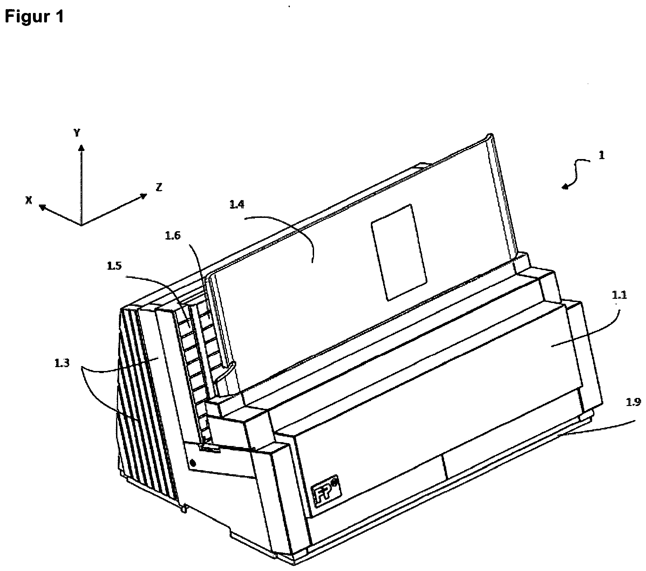

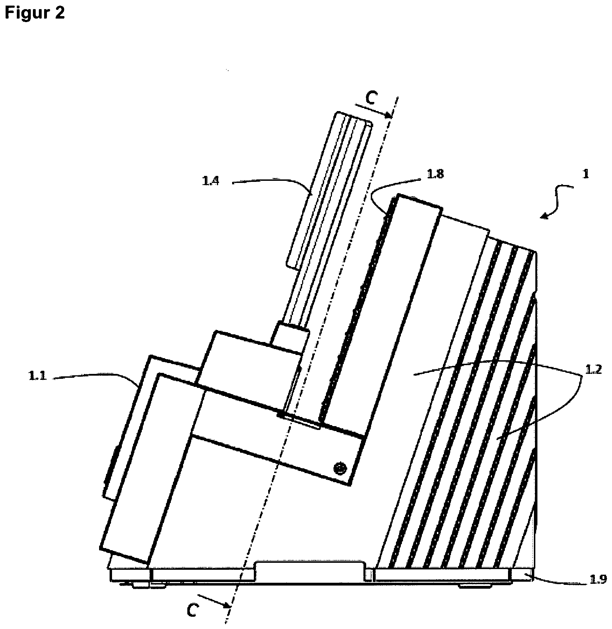

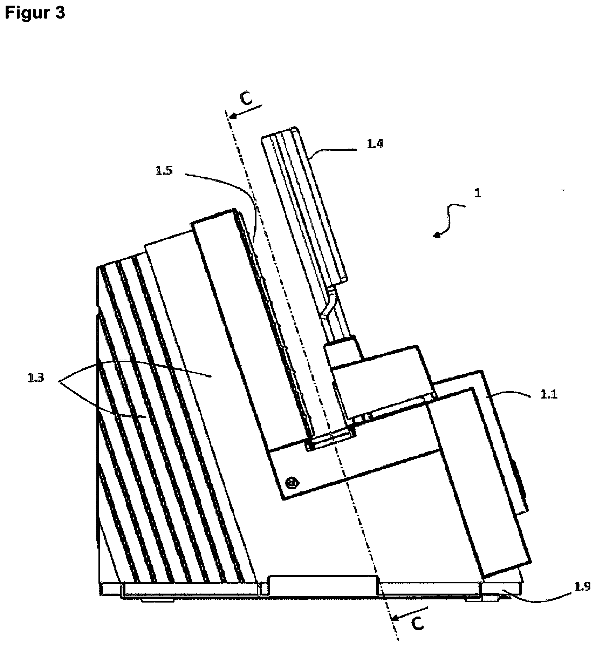

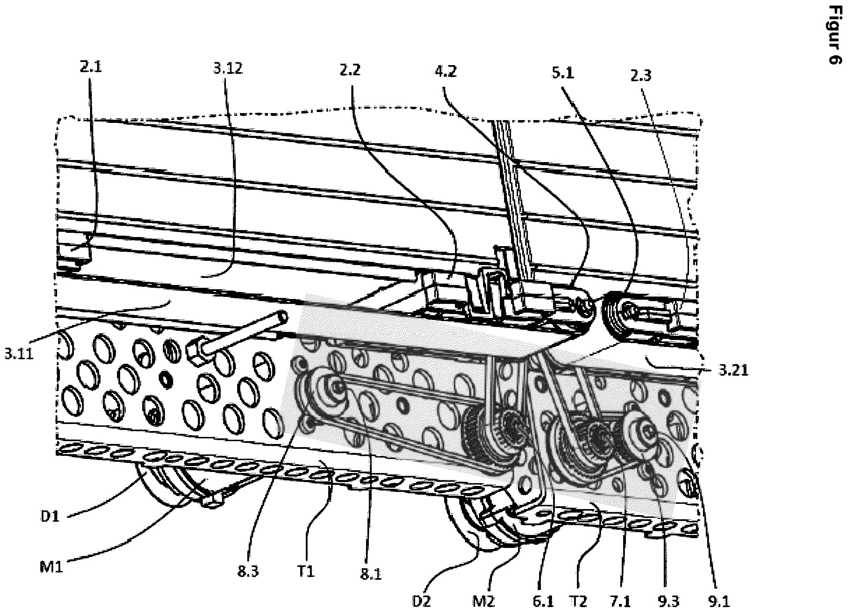

## Bezugszeichenliste (Figuren 1-6):

| | |
|---|---|
| 1 | dynamische Waage, |
| 1.1 | Gehäuseblende an der Frontseite der dynamischen Waage, |
| 1.2 | rechtes Seitenteil des Gehäuses, poststromabwärts, |
| 1.3 | linkes Seitenteil des Gehäuses, poststromaufwärts, |
| 1.4 | Plexiglas-Schutzscheibe, an der Frontseite der dynamischen Waage, |
| 1.5 | linke Führungswand mit Gleitrippen, poststromaufwärts, |
| 1.51 | Fenster in der linken Führungswand, |
| 1.6 | Führungswand mit Gleitrippen der ersten Wiegeschale, |
| 1.61 | ein erstes Fenster in der Führungswand der ersten Wiegeschale, |
| 1.62 | ein zweites Fenster in der Führungswand der ersten Wiegeschale, |
| 1.63 | ein drittes Fenster in der Führungswand der ersten Wiegeschale, |
| 1.7 | Führungswand mit Gleitrippen der zweiten Wiegeschale, |
| 1.8 | rechte Führungswand mit Gleitrippen, poststromabwärts, |
| 1.81 | Fenster in der rechten Führungswand, |
| 1.9 | Bodenplatte der dynamischen Waage, |
| 2.1, 2.2 | Riementräger für die Transportvorrichtung der ersten Wiegeschale, |
| 2.3, 2.4 | Riementräger für die Transportvorrichtung der zweiten Wiegeschale, |
| 3.1 | erste Wiegeschale, |
| 3.10 | Transportvorrichtung der ersten Wiegeschale 3.1, |
| 3.11 | Transportriemen der Transportvorrichtung der ersten Wiegeschale, |
| 3.12 | Gleitblech für den Transportriemen der ersten Wiegeschale, |
| 3.2 | zweite Wiegeschale, |
| 3.20 | Transportvorrichtung der zweiten Wiegeschale 3.2, |
| 3.21 | Transportriemen der Transportvorrichtung der zweiten Wiegeschale, |
| 3.22 | Gleitblech für den Transportriemen der zweiten Wiegeschale, |
| 4.1, 4.2 | zwei Umlenkrollen der Transportvorrichtung der ersten Wiegeschale, |
| 4.10 | eine feststehende Drehachse der Umlenkrolle 4.1 für den Transportriemen 3.11, |
| 4.20 | eine Antriebswelle der Umlenkrolle 4.2 für den Transportriemen 3.11, |
| 4.3 | ein Zahnriemenrad hat 26 Zähne und ist formschlüssig mit Umlenkrolle 4.2 und Antriebswelle 4.20 gekoppelt, |
| L | Länge des Federblechs (F) |
| L1 | Länge der ersten Wiegeschale |
| L2 | Länge der zweiten Wiegeschale |
| 5.1, 5.2 | zwei Umlenkrollen der Transportvorrichtung 3.20 der zweiten Wiegeschale 3.2, |
| 5.10 | Antriebswelle der Umlenkrolle 5.1 für den Transportriemen 3.2, |
| 5.20 | eine feststehende Drehachse der Umlenkrolle 5.2 für den Transportriemen 3.2, |
| 5.3 | ein Zahnriemenrad hat 26 Zähne und ist formschlüssig mit Umlenkrolle 5.1 und Antriebswelle 5.10 gekoppelt, |
| 6.0 | ein Doppelzahnriemenrad des Getriebes des ersten Motors M1, |
| 6.1 | eine feststehende Drehachse des Doppelzahnriemenrads 6.0, |
| 6.2 | ein Zahnriemen für die Zahnriemenräder 4.3 und 6.3, |
| 6.3 | ein getriebeausgangsseitiges Zahnriemenrad des Doppelzahnriemenrads 6.0 hat 24 Zähne und dient zum Antrieb der Transportvorrichtung 3.10 der ersten Wiegeschale 3.1, |
| 6.4 | ein getriebeeingangsseitiges Zahnriemenrad des Doppelzahnriemenrads 6.0 hat 37 Zähne, |

| 7.0 | ein Doppelzahnriemenrad des Getriebes des zweiten Motors M2, |
| 7.1 | eine feststehende Drehachse des Doppelzahnriemenrads 7.0, |
| 7.2 | ein Zahnriemen für die Zahnriemenräder 5.3 und 7.3, |
| 7.3 | ein getriebeausgangsseitiges Zahnriemenrad des Doppelzahnriemenrads 7.0 hat 24 Zähne und dient zum Antrieb der Transportvorrichtung 3.20 der zweiten Wiegeschale 3.2, |
| 7.4 | ein getriebeausgangsseitiges Zahnriemenrad des Doppelzahnriemenrads 7.0 hat 37 Zähne, |
| 8.0 | Getriebe des ersten Motors M1, |
| 8.1 | eine Motorwelle des ersten Motors M1, |
| 8.2 | ein Zahnriemen für die Zahnriemenräder 6.4 und 8.3, |
| 8.3 | ein Zahnriemenrad an der Motorwelle 8.1 des ersten Motors M1 hat 25 Zähne, |
| 9.0 | Getriebe des zweiten Motors M2, |
| 9.1 | eine Motorwelle des zweiten Motors M2, |
| 9.2 | ein Zahnriemen für die Zahnriemenräder 7.3 und 9.3, |
| 9.3 | ein Zahnriemenrad an der Motorwelle 9.1 des zweiten Motors M2 hat 25 Zähne, |
| 10 | Riementräger der Transportvorrichtung der ersten Wiegeschale, |
| 11 | Gleitblech |
| C-C | Schnittlinie, |
| D1 | eine kodierende Drehscheibe für Encoder E1, |
| D2 | eine kodierende Drehscheibe für Encoder E2, |
| E1, E2 | zwei Encoder, |
| LS1 - LS3 | drei Sensoren, |
| M1, M2 | zwei Motoren, |
| T1 | Gestell der ersten Wiegeschale, |
| T2 | Gestell der zweiten Wiegeschale, |
| x, y, z- | Richtungen eines kartesischen Koordinatensystems, |
| z | Transportrichtung. |

**Bezugszeichenliste (Figuren 7-12):**

| A | Ausnehmungen in den Gestellen T1 und T2 der Wiegeschalen, |
| Ad1 | Adapter zur Adaption des Gestells an den ersten Wiegebalken Wb1, |
| Ad2 | Adapter zur Adaption des Gestells an den zweiten Wiegebalken Wb2, |
| B | Bodenplatte der dynamischen Waage, |
| E1 | Encoder für Motor M1, |
| E2 | Encoder für Motor M2, |
| EV1 | erste elektronische Messwertverarbeitungseinheit, |
| EV2 | zweite elektronische Messwertverarbeitungseinheit, |
| fs1 | Kerbfrequenz, bei der der 1.Kerbfilter eine maximale Signaldämpfung aufweist, |
| fs2 | Kerbfrequenz, bei der der 2.Kerbfilter eine maximale Signaldämpfung aufweist, |
| F | Federblech, |
| Fa | abgewinkeltes Teil des Federblechs F, |
| FB | Frequenzbereich der Eigenfrequenz der dynamischen Waage, |
| GST | gemeinsame Steuereinheit, |
| K1 | Flachbandkabel, verwendet zur kraftnebenschlussfreien Spannungs- und Signalversorgung für die Motoren M1, M2 und Encoder E1, E2 sowie für eine Messelektronik, |
| K2 | Flachbandkabel, verwendet zur kraftnebenschlussfreien Spannungs- und Signalversorgung für Motor M1 und Encoder E1, |
| Kb | Kerbe, |
| KH | Kabelhalter, |
| KW11 | geschirmtes Rundkabel, das vom Wiegebalken Wb1 abgeht, |
| KW12 | geschirmtes Rundkabel, das von der EV1 abgeht, |
| KW21 | geschirmtes Rundkabel, das vom Wiegebalken Wb2 abgeht, |
| KW22 | geschirmtes Rundkabel, das von der EV2 abgeht, |
| L | Länge, um welche die Verlängerung der Wiegeschale erfolgt, |
| La1 | Lasteinleitung in die Wiegezelle W1, |
| La2 | Lasteinleitung in die Wiegezelle W2, |
| M1 | erster Motor, |
| M2 | zweiter Motor, |
| N | Nieten (zur Befestigung der Versteifungselemente V) des Gestells, |
| P1 | Leiterplatte am Gestell des ersten Wiegebalkens Wb1, |
| P2 | Leiterplatte am Gestell des zweiten Wiegebalkens Wb2, |
| R1 | erstes Rundkabel, das von der Leiterplatte P1 abgeht, |
| R2 | zweites Rundkabel, das von der Leiterplatte P2 abgeht, |
| SBT | Sperrbereich des Tiefpasses, |
| SK | Störkräfte, die anhängig von der Antriebsgeschwindigkeit durch den Antrieb eingeprägt werden, wobei die Antriebsgeschwindigkeit des Transportriemens proportional zur Motordrehzahl ist. Die Getriebeauslegung wurde so gewählt, dass bei maximaler Transportgeschwindigkeit die Störfrequenzen unterhalb der Eigenfrequenz der dynamischen Waage liegen. |
| ST | stufenweise Erhöhung der Transportgeschwindigkeit, |
| T1 | Gestell der ersten Wiegeschale, |

T2 Gestell der zweiten Wiegeschale,

Tr1 Träger für die Kaskaden-Anordnung der Wiegebalken,

Tr2 Träger, angeordnetam Punkt La2 des zweiten Wiegebalkens,

v Transportgeschwindigkeit des Transportriemens,

$v_{max}$ maximale Transportgeschwindigkeit 700 mm/s,

V Versteifungselemente in den Gestellen T1 und T2der Wiegeschalen,

W Welle,

W1 Wägezelle des ersten Wiegebalkens Wb1,

W2 Wägezelle des zweiten Wiegebalkens Wb2,

Wb1 erster Wiegebalken,

Wb2 zweiter Wiegebalken,

z Transportrichtung.


**Patentansprüche**

1. Dynamische Waage mit zwei Wägeeinheiten, wobei jede Wägeeinheit minde-stens mit einer auf einem Gestell montierten Wägeschale und mit einer Wägezelle (W1, W2) ausgestattet ist, die auf einem Wiegebalken (Wb1, Wb2) angeordnet ist, wobei jeweils die Wägeschale in einer oberen Ebene liegt und die Wägezelle zwischen der oberen Ebene und einer in Schwerkraftrichtung von der oberen Ebene entfernten unteren Ebene angeordnet ist,
wobei die Wägezelle (W2) einer zweiten Wägeeinheit in Schwerkraftrichtung zu der Wägezelle (W1) einer ersten Wägeeinheit funktional kaskadiert angeordnet, die zweite Wägeeinheit mit ihrer unteren Ebene auf einer in einer x/z Bezugsebene eines Koordinatensystems liegenden Bodenplatte (B) der dynamischen Waage (1) befestigt ist,
wobei je eine elektronische Messwertverarbeitungseinheit (EV1, EV2) den Wägezellen (W1, W2) zugeordnet ist,
mit mindestens einem Sensor (LS1, LS2, LS3) und mit einer Transportvorrichtung für einen Transport eines auf der Kante stehenden Wägeguts in eine Transportrichtung z während des Wägens in jeder Wägeeinheit, wobei jede Transportvorrichtung einen Transportriemen, einen Motor (M1, M2) zum Antrieb der vorgenannten Transportvorrichtung und einen Encoder (E1, E2) aufweist,
mit einer Übertragung der Ansteuerungssignale von einer gemeinsamen Steuereinheit (GST) zu den Motoren (M1, M2) und mit einer Übertragung der Ausgangssignale der elektronischen Messwertverarbeitungseinheiten (EV1, EV2) der ersten Wägezellen (W1, W2) zu den Eingängen der gemeinsamen Steuereinheit (GST),
**dadurch gekennzeichnet, dass**
ein Federblech (F) auf einer ersten Welle oder einer feststehenden Achse einer Umlenkrolle (4.1) des in Transportrichtung z des Wägegutes laufenden ersten Transportriemens (3.11) montiert ist, welches um eine Länge (L) entgegen der Transportrichtung des Transportriemens (3.11) über die erste Welle oder die feststehende Achse hinausragt, wobei das Federblech auf der Länge (L) als Gleitblech (3.12) ausgebildet und posteingangsseitig mit einem Teil (Fa) in Schwerkraftrichtung abgewinkelt ist
und
die Übertragung der Ansteuerungssignale zu dem ersten Motor (M1) über ein erstes und zweites Flachbandkabel (K1, K2) erfolgt, welche eine Dicke und eine Breite aufweisen, wobei die Breite größer als die Dicke ist, wobei die Oberflächen auf der breiten Seite der Flachbandkabel parallel zu den mit jeweils einer Wägezelle versehenen Oberflächen der Wiegebalken angeordnet sind, und wobei sowohl die Übertragung der ausgangsseitigen Ansteuerungssignale der gemeinsamen Steuereinheit (GST) zu dem zweiten Motor (M2) als auch die Übertragung der Ausgangssignale der elektronischen Messwertverarbeitungseinheit (EV1) der ersten Wägezelle (W1) zu den Eingängen der gemeinsamen Steuereinheit (GST) über das erste Flachbandkabel (K1) erfolgt,
und

a) die beiden für den Vortrieb der Transportriemen vorgesehenen Motoren (M1, M2) gleich aufgebaut sind und jeweils eine Motorwelle (8.1, 9.1) aufweisen, die zur Bodenplatte (B) hin in x-Richtung geneigt ist, wobei der geringste Abstand der Motorwellen (8.1, 9.1) von der Bodenplatte (B) kleiner oder gleich ist, als der größte Außendurchmesser der Motoren (M1, M2) ist,
b) die poststromaufwärts angeordnete erste Wägeschale auf einem ersten Gestell (T1) und eine in Transportrichtung z angeordnete zweite Wägeschale auf einem zweiten Gestell (T2) montiert ist und auf der Rückseite jedes Gestells (T1, T2) jeweils ein Adapter (Ad1, Ad2) vorgesehen ist, der an dem zugehörigen Gestell (T1, T2) montiert ist, wobei der zweite Motor (M2) mit einer Toleranz von kleiner gleich +/-10mm lotrecht unter dem zweiten Adapter (Ad2) an dem zweiten Gestell (T2) angeordnet ist, wobei das zweite Gestell (T2) an dem einem Ende eines Trägers (Tr2) aufliegt, wobei das andere Ende des Trägers (Tr2) an einem Lasteinleitungspunkt (La2) des Wiegebalkens (Wb2) montiert ist,
c) die Motoren (M1, M2) mit einer Toleranz von kleiner gleich +/- 10mm symmetrisch zum Lasteinleitungspunkt (La2) des Wiegebalkens (Wb2) angeordnet sind
und
d) ein an dem Gestell (T1, T2) montiertes Getriebe (6.0, 7.0, 8.0, 9.0) Zahnriemenräder (4.3, 5.3, 6.0, 7.0, 8.3, 9.3) aufweist, dass die Zahnriemenräder durch geeignete Getriebeumsetzung gleichsinnig wie die Motoren (M1, M2) laufen und die Motordreh-zahl so gewählt wird, dass sich die Störschwingungen unterhalb einer maximalen Transportgeschwindigkeit Vmax nur in einem Toleranzbereich von +- 0,6 g auf einen aus den Signalen der Wägezellen ermittelten Messwert auswirken.

2. Dynamische Waage nach Anspruch 1, **dadurch gekennzeichnet, dass** die erste Wägeeinheit zur schnellen Messung eines kürzesten Wägegutes vorgesehen ist, und die zweite Wägeeinheit zur schnellen Messung eines Wägegutes vorgesehen ist, dessen Länge größer als die des kürzesten Wägegutes ist sowie dass die Länge der ersten Wiegeschale in Transportrichtung z größer als die der zweiten Wiegeschale ist.

3. Dynamische Waage nach Anspruch 1, **dadurch gekennzeichnet, dass** das Gestell und die Wiegeteller aus Aluminiumlegierung AlMg3F28 gefertigt sind.

4. Dynamische Waage nach Anspruch 1, **dadurch gekennzeichnet, dass** die Gestelle Versteifungsrippen als Versteifungselemente (V) aufweisen.

5. Dynamische Waage nach Anspruch 1, **dadurch gekennzeichnet, dass** die Eigenfrequenz der dynamischen Waage (1) oberhalb von 25 Hz liegt.

6. Dynamische Waage nach Anspruch 5, **dadurch gekennzeichnet, dass** die Eigenfrequenz der dynamischen Waage (1) zwischen 30 und 50 Hz liegt.

7. Dynamische Waage nach Anspruch 1, **dadurch gekennzeichnet, dass** sich alle Antriebsräder gleichsinnig drehen.

8. Dynamische Waage nach Anspruch 1, **dadurch gekennzeichnet, dass** eine digitale Ausfilterung von Störschwingungen der Signale der Wägezellen in den elektrisch angeschlossenen Messwertverarbeitungseinheiten (VE1, VE2) der Wägezellen erfolgt.

9. Dynamische Waage nach Anspruch 8, **dadurch gekennzeichnet, dass** ein Tiefpassfilter verwendet wird, welches Frequenzen oberhalb von ca. 15 - 20 Hz um mindestens 60 dB dämpft, und dass zwei digitale Kerbfilter eine Störschwingung-und die dazugehörige erste Harmonische um mindestens 70 dB dämpfen.

10. Dynamische Waage nach Anspruch 1, **dadurch gekennzeichnet, dass** die maximale Transportgeschwindigkeit Vmax = 700 mm/s beträgt.

11. Dynamische Waage nach Anspruch 1, **dadurch gekennzeichnet, dass** eine erste Leiterplatte (P1) am ersten Gestell (T1) sowie eine zweite Leiterplatte (P2) und die elektronische Messwertverarbeitungseinheit (EV1) der ersten Wägeeinheit an dem zweiten Gestell (T2) montiert ist, dass das erste Flachbandkabel (K1) zwischen einer an der Bodenplatte (B) montierten ersten Kabelhalterung(KH) und der zweiten Leiterplatte (P2) und das zweite Flachbandkabel (K2) zwischen den Leiterplatten (P1 und P2) verläuft.

12. Dynamische Waage nach Anspruch 1, **dadurch gekennzeichnet, dass** die erste und zweite Wiegeschale (3.1, 3.2) jeweils eine Führungswand (1.6, 1.7) und einen Transportriemen (3.11, 3.21) aufweisen.

**Claims**

1. A dynamic weighing scale comprising two weighing units, each weighing unit being equipped with at least one weighing dish mounted on a frame and with a weighing cell (W1, W2) that is arranged on a weighing beam (Wb1, Wb2), the weighing dish being respectively located in an upper plane and the weighing cell being arranged between the upper plane and a lower plane spaced from the upper plane in the direction of gravity,
the weighing cell (W2) of a second weighing unit being arranged in a functional cascade-like manner in the direction of gravity to the weighing cell (W1) of a first weighing unit, the second weighing unit being fastened with its lower plane on a bottom plate (B) of the dynamic weighing scale (1) located in an x/z reference plane of a coordinate system,
one electronic measurement value processing unit (EV1, EV2) each being assigned to the weighing cells (W1, W2),
comprising at least one sensor (LS1, LS2, LS3) and a transport device for transport of a good to be weighed standing on its edge in an transport direction z during the weighing process in each weighing unit, each transport device including a transport belt, a motor (M1, M2) for driving the above-mentioned transport device, and an encoder (E1, E2),
comprising a transmission of the control signals from a common control unit (GST) to the motors (M1, M2) and a transmission of the output signals of the electronic measurement value processing units (EV1, EV2) of the first weighing cells (W1, W2) to the inputs of the common control unit (GST),
**characterized by that** a spring metal sheet (F) is mounted on a first shaft or a stationary axis of a return roller (4.1) of the first transport belt (3.11) moving in the transport direction z of the good to be weighed, said spring metal sheet projecting by a length (L) against the transport direction of the transport belt (3.11) beyond the first shaft or the stationary axis, the spring metal sheet being formed on the length (L) as a sliding sheet (3.12) and being angled on the side of the mail input with a part (Fa) in the direction of gravity, and

the transmission of the control signals to the first motor (M1) occurs by a first and second ribbon cable (K1, K2) having a thickness and a width, the width being larger than the thickness, the surfaces on the wide side of the ribbon cable being arranged in parallel to the surfaces of the weighing beam provided with one weighing cell each, and the transmission of the output control signals of the common control unit (GST) to the second motor (M2) as well as the transmission of the output signals of the electronic measurement value processing unit (EV1) of the first weighing cell (W1) to the inputs of the common control unit (GST) occurring by the first ribbon cable (K1), and

    a) the two motors (M1, M2) provided for the advancement of the transport belt have an identical structure and include one motor shaft (8.1, 9.1) each that is inclined in the x-direction toward the bottom plate (B), the smallest distance of the motor shafts (8.1, 9.1) to the bottom plate (B) being smaller or identical with respect to the largest outer diameter of the motors (M1, M2),

    b) the first weighing dish arranged in the upstream direction of the mail is mounted on a first frame (T1) and a second weighing dish arranged in the transport direction z is mounted on a second frame (T2), and one adapter (Ad1, Ad2) each is provided on the rear side of each frame (T1, T2) that is mounted on the respective frame (T1, T2), the second motor (M2) being arranged on the second frame (T2) with a tolerance of smaller than or equal to +/- 10 mm perpendicularly below the second adapter (Ad2), the second frame (T2) resting on the one end of a carrier (Tr2), the other end of the carrier (Tr2) being mounted at a load introduction point (La2) of the weighing beam (Wb2),

    c) the motors (M1, M2) are arranged symmetrically to the load introduction point (La2) of the weighing beam (Wb2) with a tolerance of smaller than +/- 10 mm, and

    d) a gearbox (6.0, 7.0, 8.0, 9.0) mounted at the frame (T1, T2) includes toothed belt gears (4.3, 5.3, 6.0, 7.0, 8.3, 9.3), so that the toothed belt gears move by a suitable gear configuration in the same sense as the motors (M1, M2), and the motor speed is selected such that the parasitic oscillations have, below a maximum transport speed Vmax in a tolerance range of +/- 0,6 g, only an effect on a measurement value determined from the signals of the weighing cells.

2. The dynamic weighing scale of claim 1, **characterized by that** the first weighing unit is provided for a quick measurement of the shortest good to be weighed, and the second weighing unit is provided for a quick measurement of a good to be weighed, the length of which is larger than that of the shortest good to be weighed, and that the length of the first weighing dish in the transport direction z is larger than that of the second weighing dish.

3. The dynamic weighing scale of claim 1, **characterized by that** the frame and the weighing plates are made from aluminum alloy AlMg3F28.

4. The dynamic weighing scale of claim 1, **characterized by that** the frames include stiffening ribs as stiffening elements (V).

5. The dynamic weighing scale of claim 1, **characterized by that** the natural frequency of the dynamic weighing scale (1) is above 25 Hz.

6. The dynamic weighing scale of claim 5, **characterized by that** the natural frequency of the dynamic weighing scale (1) is between 30 and 50 Hz.

7. The dynamic weighing scale of claim 1, **characterized by that** all drive wheels turn in the same sense.

8. The dynamic weighing scale of claim 1, **characterized by that** a digital filtering of parasitic oscillations of the signals of the weighing cells take place in the electrically connected electronic measurement value processing units (VE1, VE2) of the weighing cells.

9. The dynamic weighing scale of claim 8, **characterized by that** a low-pass filter is used that attenuates frequencies above approx. 15 - 20 Hz by at least 60 dB, and that two digital notch filters attenuate a parasitic oscillation and the respective first harmonic by at least 70 dB.

10. The dynamic weighing scale of claim 1, **characterized by that** the maximum transport speed is Vmax = 700 mm/s.

11. The dynamic weighing scale of claim 1, **characterized by that** a first printed-circuit board (P1) is mounted at the first frame (T1), and a second printed-circuit board (P2) and the electronic measurement value processing unit (EV1) of the first weighing unit are mounted at the second frame (T2), that the first ribbon cable (K1) extends between a first cable holder (KH) mounted at the bottom plate (B) and the second printed-circuit board (P2), and the second ribbon cable (K2) extends between the printed-circuit boards (P1 and P2).

12. The dynamic weighing scale of claim 1, **characterized by that** the first and second weighing dishes (3.1, 3.2) each include a guide wall (1.6, 1.7) and a transport belt (3.11, 3.21).


**Revendications**

1. Balance dynamique comprenant deux unités de pesée, chaque unité de pesée étant équipée d'au moins une assiette de pesage montée à un châssis et d'une cellule de pesage (W1, W2) qui est disposée à un fléau (Wb1, Wb2), l'assiette de pesage étant respectivement positionnée dans un plan supérieur et la cellule de pesage étant disposée entre le plan supérieur et un plan inférieur à distance du plan supérieur en direction de gravité,
   la cellule de pesage (W2) d'une deuxième unité de pesée étant disposée de façon de cascade fonctionnelle en direction de gravité vers la cellule de pesage (W1) d'une première unité de pesée, la deuxième unité de pesée étant fixée avec son plan inférieur sur une plaque de fond (B) de la balance dynamique (1) positionnée dans un plan de référence x/z d'un système de coordonnées,
   une unité de traitement des mesures électronique (EV1, EV2) chacune étant associée aux cellules de pesage (W1, W2),
   comprenant au moins un capteur (LS1, LS2, LS3) et un dispositif de transport pour transporter un corps à peser posé sur le chant en direction de transport z pendant le processus de pesage dans chaque unité de pesée, chaque dispositif de transport comportant un convoyeur, un moteur (M1, M2) pour entraîner le dispositif de transport mentionné ci-dessus, et un codeur (E1, E2),
   comprenant une transmission des signaux de commande à partir d'une unité de commande commune (GST) aux moteurs (M1, M2) et une transmission des signaux de sortie des unités de traitement des mesures électroniques (EV1, EV2) des premières cellules de pesage (W1, W2) aux entrées de l'unité de commande commune (GST),
   **caractérisée en ce qu'**une tôle de ressort (F) est montée à un premier arbre ou un axe stationnaire d'un tambour de renvoi (4.1) du premier convoyeur (3.11) se déplaçant en direction de transport z du corps à peser, cette tôle de ressort faisant saillie par une longueur (L) contre la direction de transport du convoyeur (3.11) au-delà du premier arbre ou l'axe stationnaire, la tôle de ressort étant formée sur la longueur (L) comme tôle de glissage (3.12) et étant coudée sur le côté de l'entrée des articles de courrier avec une partie (Fa) en direction de gravité, et
   la transmission des signaux de commande au premier moteur (M1) a lieu par un premier et un deuxième câble plat (K1, K2) ayant une épaisseur et une largeur, la largeur étant supérieure à l'épaisseur, les surfaces sur le côté épais du câble plat étant disposées en parallèle aux surfaces du fléau chacune pourvue d'une cellule de pesage, et la transmission des signaux de commande de sortie de l'unité de commande commune (GST) au deuxième moteur (M2) aussi bien que la transmission des signaux de sortie de l'unité de traitement des mesures électronique (EV1) de la première cellule de pesage (W1) aux entrées de l'unité de commande commune (GST) ayant lieu par le premier câble plat (K1), et

   a) les deux moteurs (M1, M2) prévus pour l'avancement du convoyeur ont une structure identique et comportent un arbre moteur (8.1, 9.1) qui est incliné vers la plaque de fond (B) en direction x, la distance la plus petite des arbres moteurs (8.1, 9.1) de la plaque de fond (B) étant inférieure ou identique au diamètre extérieur le plus grand des moteurs (M1, M2),
   b) la première assiette de pesage disposée en direction en amont des articles de courrier est montée à un premier châssis (T1) et une deuxième assiette de pesage disposée en direction de transport z est montée à un deuxième châssis (T2), et un adaptateur (Ad1, Ad2) chacun est prévu au côté arrière de chaque châssis (T1, T2) qui est monté au châssis respectif (T1, T2), le deuxième moteur (M2) étant disposé au deuxième châssis (T2) avec tolérance inférieure ou identique à +/- 10 mm perpendiculairement au-dessous du deuxième adaptateur (Ad2), le deuxième châssis (T2) reposant à l'une extrémité d'un support (Tr2), l'autre extrémité du support (Tr2) étant montée à un point d'introduction de la charge (La2) du fléau (Wb2),
   c) les moteurs (M1, M2) sont disposé de façon symétrique au point d'introduction de la charge (La2) du fléau (Wb2) avec une tolérance inférieure à +/- 10 mm, et
   d) une boîte de vitesses (6.0, 7.0, 8.0, 9.0) montée au châssis (T1, T2) comporte des roues de courroie crantée (4.3, 5.3, 6.0, 7.0, 8.3, 9.3), de façon que les roues de courroie crantée tournent, par une configuration de réduction appropriée, de même sens que les moteurs (M1, M2), et la vitesse du moteur est choisie de cette façon que les oscillations parasites aient, au-dessous d'une vitesse de transport maximale Vmax dans une gamme de tolérance de +/- 0,6 g seulement, un effet sur une mesure déterminée à partir des signaux des cellules de pesage.

2. Balance dynamique selon la revendication 1, **caractérisée en ce que** la première unité de pesée est prévue pour une mesure rapide d'un corps à peser le plus court, et la deuxième unité de pesée est prévue pour une mesure rapide d'un corps à peser, la longueur duquel est supérieure à celle du corps à peser le plus court, et que la longueur de la première assiette de pesage en direction de transport z est supérieure à celle de la deuxième assiette de pesage.

3. Balance dynamique selon la revendication 1, **caractérisée en ce que** le châssis et les assiettes de pesage sont en l'alliage d'aluminium AlMg3F28.

4. Balance dynamique selon la revendication 1, **caractérisée en ce que** les châssis comportent des nervures de rigidification comme des éléments de rigidification (V).

5. Balance dynamique selon la revendication 1, **caractérisée en ce que** la fréquence propre de la balance dynamique (1) est au-dessus de 25 Hz.

6. Balance dynamique selon la revendication 5, **caractérisée en ce que** la fréquence propre de la balance dynamique (1) est entre 30 et 50 Hz.

7. Balance dynamique selon la revendication 1, **caractérisée en ce que** toutes les roues d'entraînement tournent de même sens.

8. Balance dynamique selon la revendication 1, **caractérisée en ce qu'**un filtrage digital d'oscillations parasites des signaux des cellules de pesage a lieu dans les unités de traitement des mesures électroniques (VE1, VE2) électriquement raccordées des cellules de pesage.

9. Balance dynamique selon la revendication 8, **caractérisée en ce qu'**un filtre passe-bas est utilisé qui atténue des fréquences au-dessus d'environ 15 - 20 Hz par au moins 60 dB, et que deux filtres à encoche digitaux atténuent une oscillation parasite et le premier harmonique respectif par au moins 70 dB.

10. Balance dynamique selon la revendication 1, **caractérisée en ce que** la vitesse de transport maximale est Vmax = 700 mm/s.

11. Balance dynamique selon la revendication 1, **caractérisée en ce qu'**une première carte imprimée (P1) est montée au premier châssis (T1), et une deuxième carte imprimée (P2) et l'unité de traitement des mesures électronique (EV1) de la première unité de pesée sont montées au deuxième châssis (T2), que le premier câble plat (K1) s'étend entre un premier support de câble (KH) monté à la plaque de fond (B) et la deuxième carte imprimée (P2), et le deuxième câble plat (K2) s'étend entre les cartes imprimées (P1 et P2).

12. Balance dynamique selon la revendication 1, **caractérisée en ce que** la première et la deuxième assiette de pesage (3.1, 3.2) chacune comportent une paroi de guidage (1.6, 1.7) et un convoyeur (3.11, 3.21).

**Figur 1**

**Figur 2**

**Figur 3**

**Figur 4**

**Figur 5**

**Figur 6**

**Figur7:**

**Figur8:**

Transportrichtung des Wägegutes

Tr1 Ad1 K2 Tr2 Ad2

B

P1

M1, E1

K1

M2, E2

P2

**Figur 9:**

**Figur 10:**

**Figur 11:**

**Figur 12:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 974819 B1
- EP 2520911 A1
- EP 974819 A
- EP 2017589 A2
- EP 2520911 A